# EUROPEAN PATENT SPECIFICATION

(11) **EP 0 923 702 B1**
(45) Date of publication and mention of the grant of the patent: **29.05.2002**
(21) Application number: 96930713.1
(22) Date of filing: 05.09.1996
(51) Int. Cl.: G01B 7/06, B29D 30/54

(54) **METHOD AND APPARATUS FOR MEASURING THE THICKNESS OF RUBBER OVER A METAL REINFORCED LAYER**
VERFAHREN UND VORRICHTUNG ZUM MESSEN DER DICKE EINES GUMMIBELAGS AUF EINER METALLVERSTÄRKTEN UNTERLAGE
PROCEDE ET APPAREIL DE MESURE DE L'EPAISSEUR DE CAOUTCHOUC SUR UNE COUCHE A RENFORT METALLIQUE

(43) Date of publication of application: 23.06.1999
(73) Proprietor: THE GOODYEAR TIRE & RUBBER COMPANY, Akron, Ohio 44316-0001 (US)
(72) Inventor: PARRISH, Gary, Charles, Canal Fulton, OH 44614 (US)
(74) Representative: Leitz, Paul
(86) International application number: US9614245
(87) International publication number: WO9810240

(56) References cited:
- DE-A- 2 750 017
- US-A- 1 880 802
- US-A- 3 237 310
- ZA-A- 9 403 773

## Description

### Technical Field

This invention pertains to the art of methods and apparatuses for use in the retreading of tires, and more specifically to methods and apparatuses for measuring the thickness of rubber overlaying the belt of a tire, such as when an old tread is being ground off of a tire casing.

### Background Art

As a tire is used, the tread of the tire tends to wear off. Sometimes it is desirable to attach a new tread onto the tire casing. The process of putting a new tread on a tire casing is known as retreading. In the process of retreading, it is necessary to grind or buff the rubber overlaying the belt of the tire, known as undertread, to a specific thickness, such as 3/32 (0,24 cm) of an inch, before attaching the new tread. Thus, an important step in the retreading process is measuring the thickness of the undertread.

Common problems often encountered in the art deal with the alignment of sensors on a buffer machine used to measure the undertread thickness. If the sensors are knocked out of alignment, for example, by a tire being mounted on a buffer machine, the operator has to realign the sensors. Also, a sequential alignment of the sensors may be desired. A sequential alignment is an alignment in which one sensor comes into operative association with the tire casing before another sensor. The prior art does not disclose sequential alignment of sensors. Still another alignment problem is that sensors are displaced out of alignment when they are brought into operative association with a tire casing.

The present invention provides a method and apparatus for measuring the undertread thickness as defined in claims. Thus, the alignment difficulties inherent in current undertread measuring apparatuses are overcome in a way which is simple and efficient, while providing better and more advantageous results.

### Disclosure of Invention

The present invention, an improved undertread measuring apparatus, includes a lift cylinder which raises and lowers the undertread sensors and is attached to a support structure. This invention also includes a sensor holding plate for holding the undertread sensors and an alignment mechanism.

One advantage of the present invention is that it enables the undertread sensors to automatically realign when impacted. If, for example, while the operator was mounting a tire casing, the tire casing was to hit the undertread sensors, they would simply swing out of the way and then realign for undertread measurement.

Another advantage of the present invention is that it sequences the undertread sensors. When the operator lowers the undertread sensors, one sensor is brought into operative association with the tire, then, sequentially, another sensor is brought into operative association with the tire.

Still another advantage of the present invention is that it self-aligns the undertread sensors when they are brought into operative association with the tire casing. This self-alignment is maintained even during the rotation of the tire casing.

Still other benefits and advantages of the invention will become apparent to those skilled in the art to which it pertains upon a reading and understanding of the following detailed specification.

### Brief Description of Drawings

The invention may take physical form in certain parts and arrangement of parts, a preferred embodiment of which will be described in detail in this specification and illustrated in the accompanying drawings which form a part hereof and wherein:
FIGURE 1 is a perspective side view of an improved undertread measuring apparatus of the present invention;
FIGURE 2 is a perspective front view of the improved undertread measuring apparatus of the present invention;
FIGURE 3 is a perspective bottom view of the improved undertread measuring apparatus of the present invention;
FIGURE 4 is an enlarged perspective bottom view of the improved undertread measuring apparatus showing rollers positioned in line with each other;
FIGURE 5 is a front view of a prior art undertread measuring apparatus being used with a tire buffer machine;
FIGURE 6 is a side view of a prior art undertread measuring apparatus being used with a tire buffer machine;
FIGURE 7 is an enlarged front view of a prior art undertread measuring apparatus which has been knocked out of alignment;
FIGURE 8 is a front view of a prior art undertread measuring apparatus which cannot be aligned sequentially;
FIGURE 9 is an enlarged front view of a prior art undertread measuring apparatus which pivots out of alignment;
FIGURE 10 is a front view of an improved undertread measuring apparatus of the present invention, being used with a tire buffer machine;
FIGURE 11 is a front view of an improved undertread measuring apparatus of the present invention, showing sequential alignment;
FIGURE 12 is an enlarged front view of an improved undertread measuring apparatus of the present invention, showing how the rollers prevent the undertread sensing devices from pivoting out of alignment;
FIGURE 13 is a perspective side view of another embodiment of this invention which does not require a steel tube;
FIGURE 14 is an enlarged perspective bottom view of another embodiment of this invention which has one undertread sensing device; and,
FIGURE 15 is an enlarged perspective bottom view of another embodiment of this invention in which the rollers are not in line with each other.

### Detailed Description of the Invention

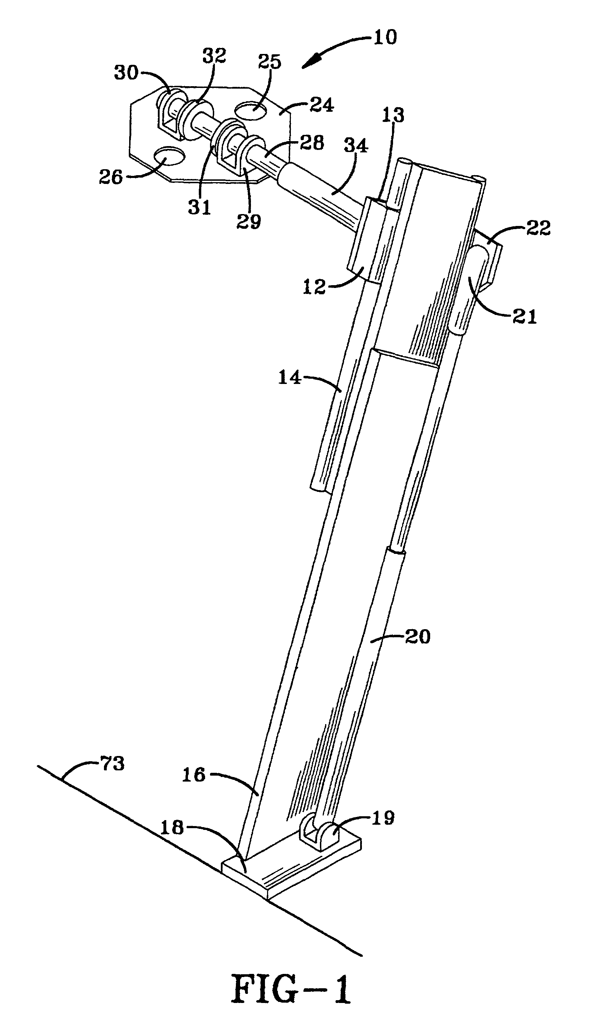

Referring now to the drawings wherein the showings are for purposes of illustrating a preferred embodiment of the invention only and not for purposes of limiting the same, FIGURES 1-3 show an improved undertread measuring apparatus 10 for measuring the thickness of rubber overlaying the belt of a tire. This embodiment is for use on tire casings but it is also applicable to tires as well. The improved undertread measuring apparatus 10 includes a sensor-to-bearing support plate 12 which is attached to a linear bearing rail assembly 14. The linear bearing rail assembly 14 is attached to a bearing support plate 16 which is attached to a base plate 18. A lift cylinder 20 is attached at one end 19 to the base plate 18 and at the other end 21 to a lift cylinder bracket 22. The lift cylinder bracket 22 is attached to one end 13 of the sensor-to-bearing support plate 12.

A sensor holding plate 24 having a left sensor slot 25 and a right sensor slot 26 is rotatably attached to a rod 28 by a front clevis 30 and a rear clevis 29 which are held in position on the rod 28 by a front split collar 32 and a rear split collar 31. The rod 28 fits inside a steel tube 34.

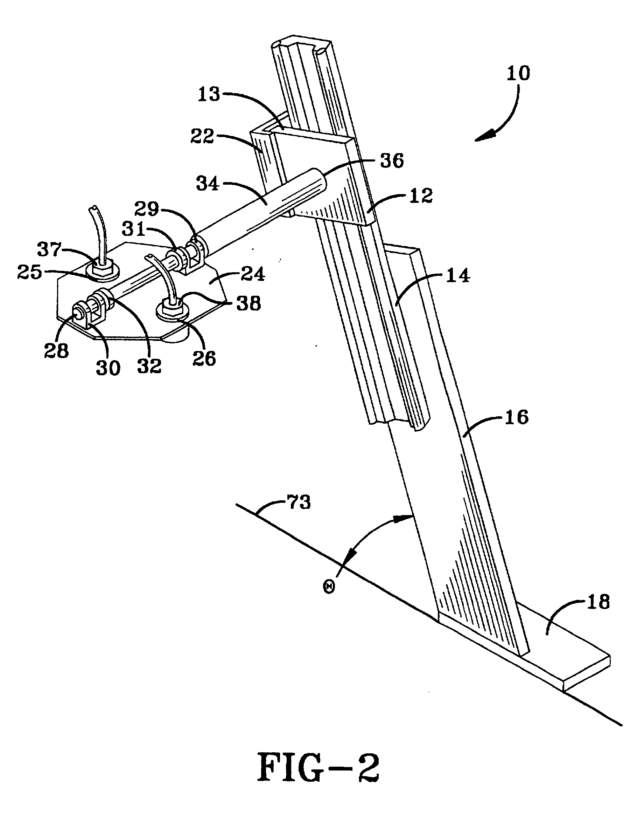

Now, with reference to FIGURE 2, steel tube 34 is attached to the center 36 of the sensor-to-bearing support plate 12. A left undertread sensing device 37, which may be of any type known in the art. For example an electromagnetic transducer which measures the magnetic resistance between itself and the belt of the tire is positioned inside the left sensor slot 25. A right undertread sensing device 38, which may be of any type known in the art, for example an electromagnetic transducer, which measures magnetic resistance between itself and the belt of the tire, is positioned inside the right sensor slot 26. FIGURE 2 also shows that bearing support plate 16 is positioned at a less than 90° angle θ with respect to line 73 which is parallel with the base 18 and the ground or floor (not shown).

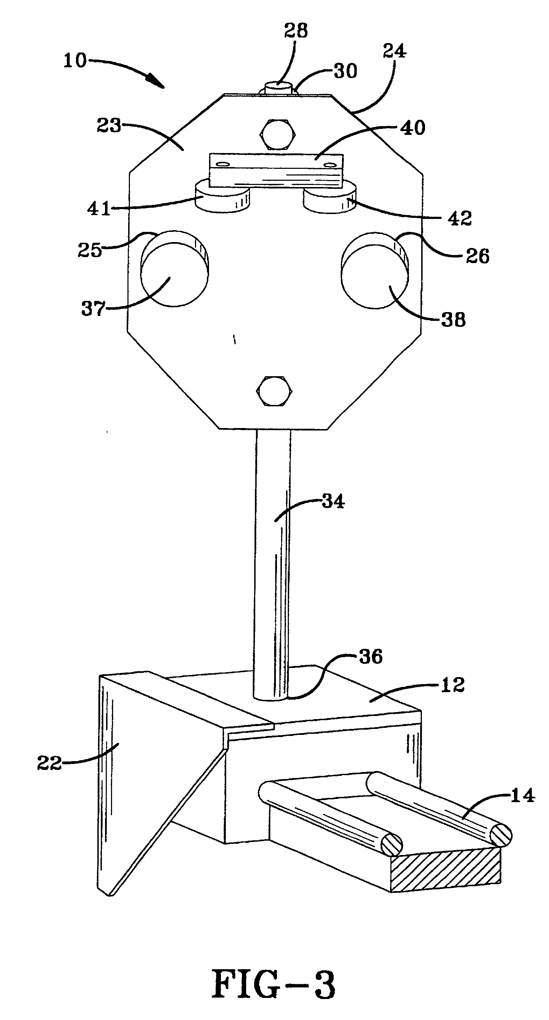

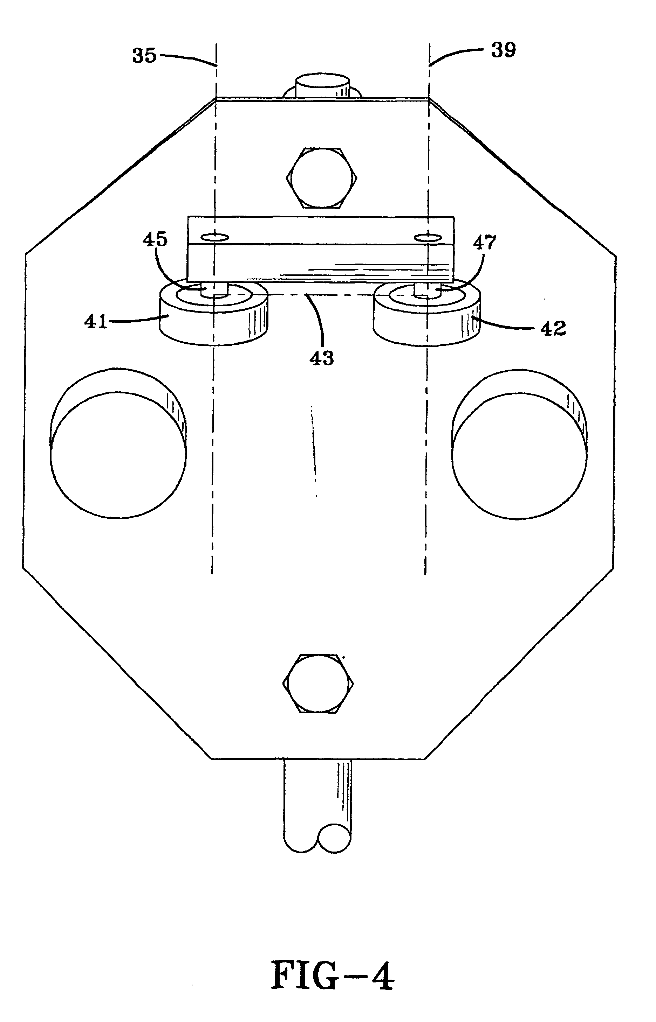

Now, with reference to FIGURE 3 which shows a bottom view of the improved undertread measuring apparatus 10, a roller bar 40 is attached to the bottom 23 of the sensor holding plate 24. Mounted to the roller bar 40, such that they can roll freely, are a left roller 41 and a right roller 42. The left roller 41 and the right roller 42 are in line with each other, as shown in FIGURE 4, such that line 35 drawn along the left roller 41 axis of rotation, and line 39 drawn along the right roller 42 axis of rotation, and a third line 43 drawn between the center 45 of the left roller 41 and the center 47 of the right roller 42, are positioned such that line 43 is substantially perpendicular to line 35 and line 39.

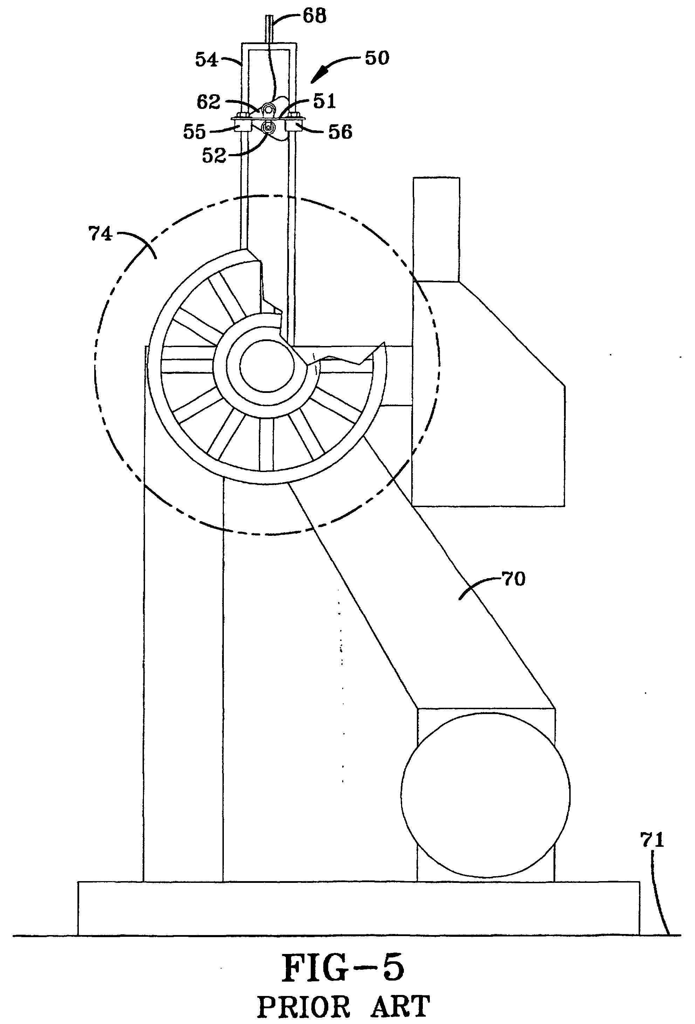

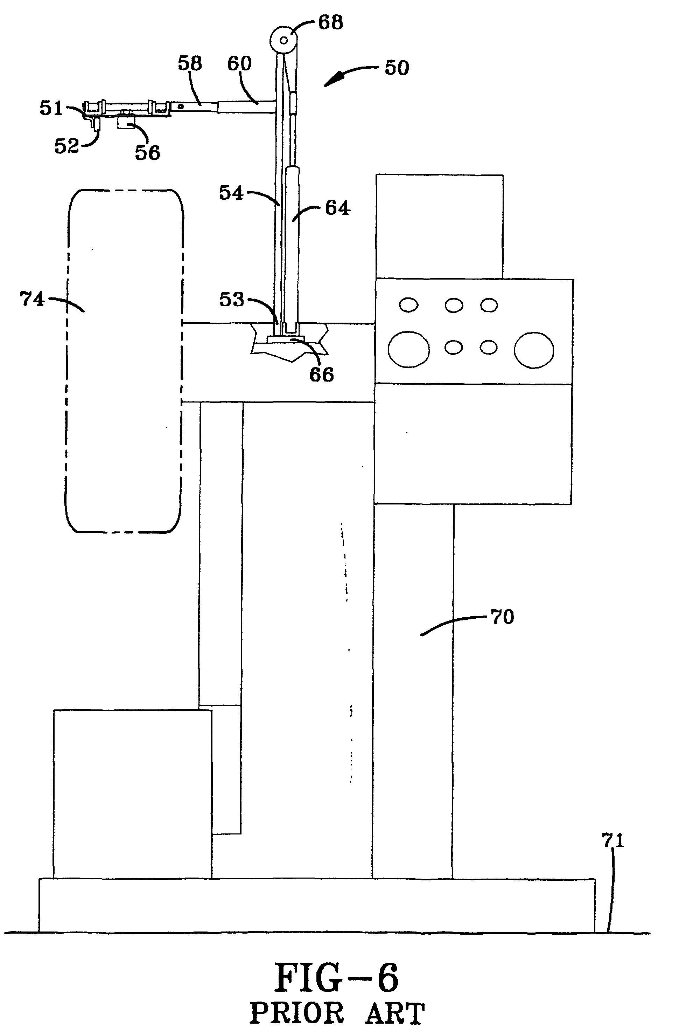

FIGURES 5 and 6 show a undertread measuring apparatus 50 currently known in the art. The undertread measuring apparatus 50 includes a support assembly 54 arranged perpendicularly with respect to the ground 71, and a support bracket 51 which supports a left undertread sensing device 55, a right undertread sensing device 56, and a roller 52 for aligning the left undertread sensing device 55 and the right undertread sensing device 56 with a tire casing 74 that can rotate. The support bracket 51 is attached to a rod 58 which fits inside a metal tube 60 that is connected to a brace plate 62. A pneumatic cylinder 64 connected to a base 66 and to the brace plate 62 through a pulley system 68, positions the support bracket 51.

In the application shown in FIGURES 5 and 6, the undertread measuring apparatus 50 is being used with a tire buffer machine 70. A tire casing 74 is shown positioned on the buffer machine 70 such that the undertread measuring apparatus 50 can be used to measure its undertread thickness. In the operation of the undertread measuring apparatus 50, an operator using the pneumatic cylinder 64, lowers the support bracket 51 so that the roller 52 comes into contact with the tire casing 74. The tire casing 74 may be rotated by the tire buffer machine 70.

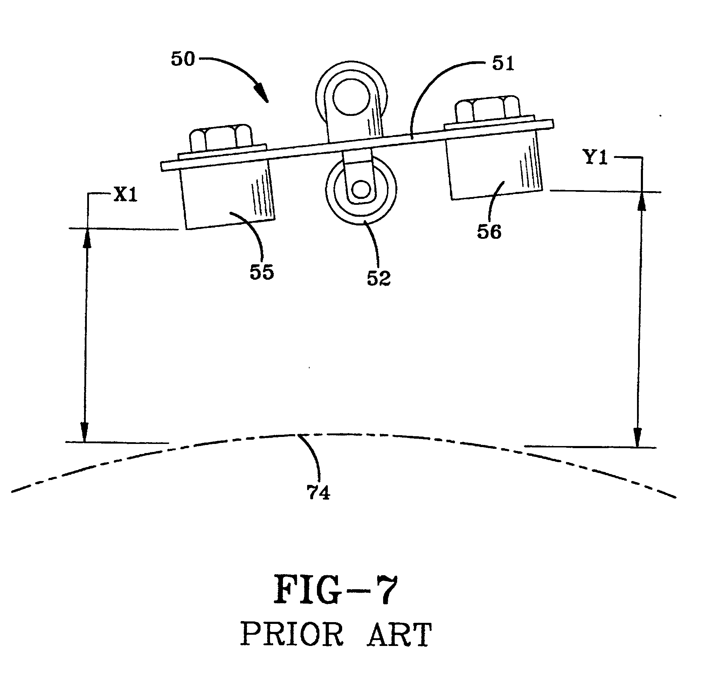

There are three common alignment problems associated with the operation of the prior art undertread measuring apparatus 50. The first alignment problem is the necessity of realignment action by the human operator should the left undertread sensing device 55 and the right undertread sensing device 56 be knocked out of alignment. If, for example, the support bracket 51 was bumped by the tire casing 74 as it was being mounted onto the tire buffer machine 70, the left undertread sensing device 55 and the right undertread sensing device 56 would be knocked out of alignment. This alignment problem is illustrated in FIGURE 7 which shows that the distance X1 between the left undertread sensing device 55 and the tire casing 74 and the distance Y1 between the right undertread sensing device 56 and the tire casing 74 are not the same. Thus, the operator would have to realign the left undertread sensing device 55 and the right undertread sensing device 56.

The second alignment problem, illustrated in FIGURE 8, is that the left undertread sensing device 55 and the right undertread sensing device 56 cannot be aligned sequentially by the support assembly 54. A sequential alignment can be accomplished by a support assembly that allows one undertread sensing device to always come into operative association with the tire casing before the other one. However, because the support assembly 54 is perpendicular with respect to a line 72 which is parallel with the ground (not shown in FIGURE 8), when the support bracket 51 is lowered by the pneumatic cylinder (not shown in FIGURE 8), both the left undertread sensing device 55 and the right undertread sensing device 56 may come into operative association with the tire casing 74 at the same time. This alignment problem is illustrated in FIGURE 8 which shows that the distance X2 between the left undertread sensing device 55 and the tire casing 74 and the distance Y2 between the right undertread sensing device 55 and the tire casing 74 are the same. This would result in the left undertread sensing device 55 and the right undertread sensing device 56 coming into operative association with the tire casing 74 simultaneously, not sequentially.

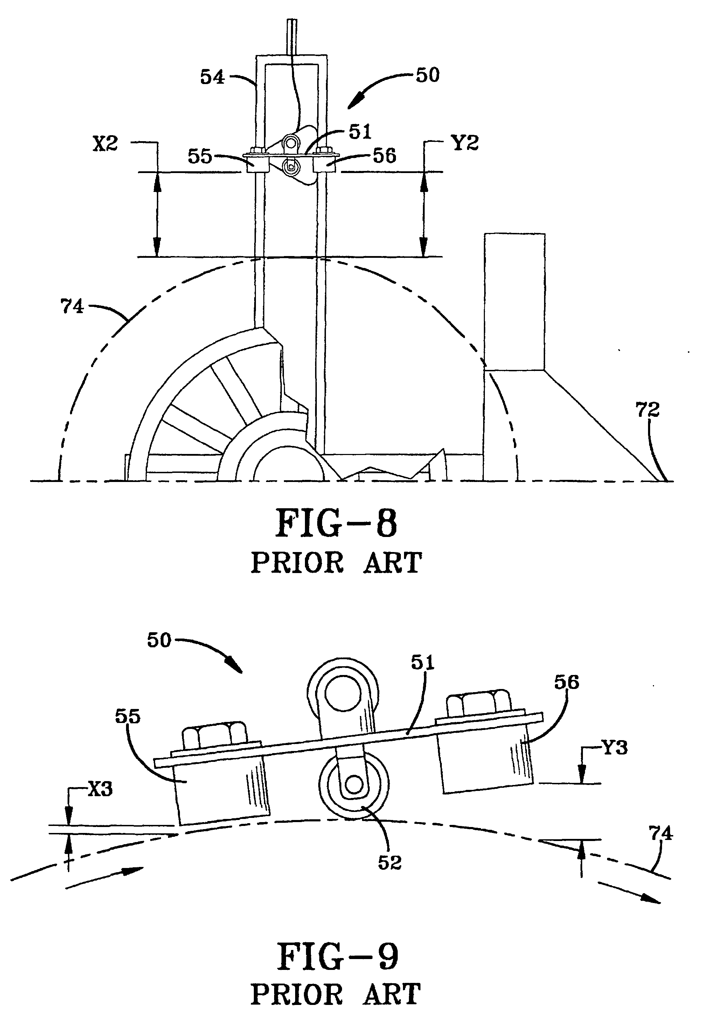

The third common alignment problem associated with the operation of the prior art undertread measuring apparatus 50, illustrated in FIGURE 9, is that the roller 52 does not ensure that the alignment of the left undertread sensing device 55 and the right undertread sensing device 56 will be maintained as the roller 52 comes into contact with the tire casing 74 and during the rotation of the tire casing 74. As the support bracket 51 is lowered, the roller 52 comes into contact with the tire casing 74. The support bracket 51 can pivot about the roller 52 causing one sensing device, for example the left undertread sensing device 55, to come into association with the tire casing 74 at a distance X3 which may be too close to the tire casing 74 for proper alignment. Thus, the left undertread sensing device 55 would be misaligned and would be likely to incorrectly measure the undertread thickness. At the same time, the other sensing device, for example the right undertread sensing device 56, would come into association with the tire casing 74 at a distance Y3 which may be too far from the tire casing 74 for proper alignment. Thus, the right undertread sensing device 56 would be misaligned and would be likely to incorrectly measure the undertread thickness.

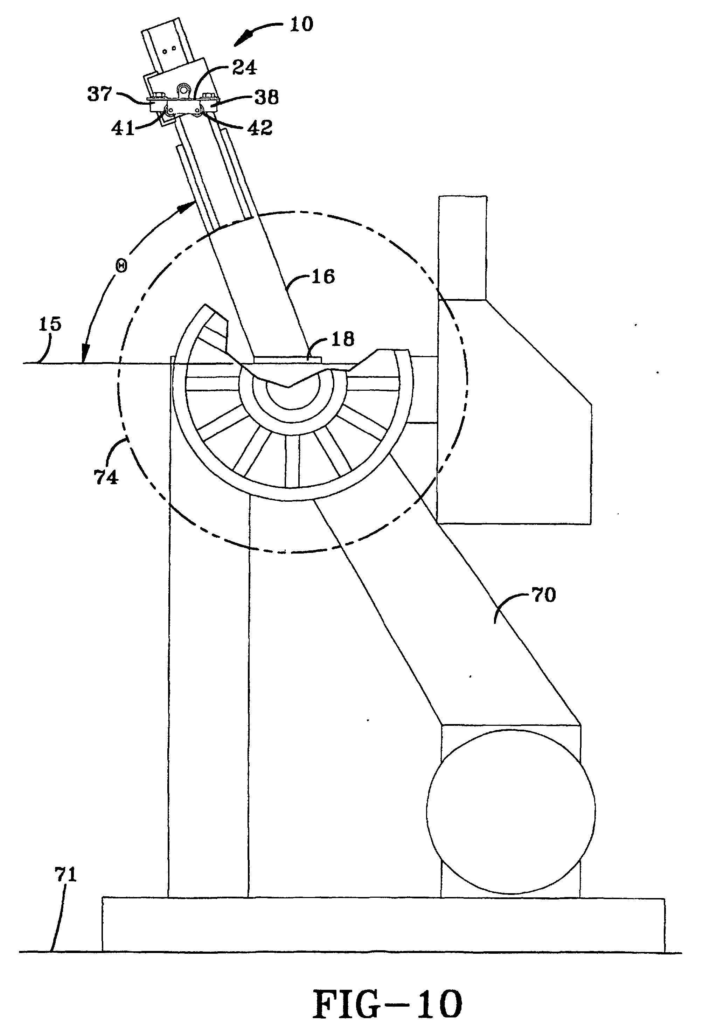

It will now be explained how the current invention, an improved undertread measuring apparatus 10, shown in FIGURES 1-3, overcomes the alignment problems of the prior art mentioned above. FIGURE 10 shows an improved undertread measuring apparatus 10 being used with a tire buffer machine 70. A tire casing 74 is shown positioned on the buffer machine 70 such that the improved undertread measuring apparatus 10 can be used to measure its undertread thickness.

In the operation of the improved undertread measuring apparatus 10, referring now to FIGURES 1-3 and FIGURE 10, an operator using the lift cylinder 20 lowers the sensor holding plate 24 toward the tire casing 74.

The problem of having the sensing devices knocked out of alignment and thus requiring operator input to realign, known in the prior art and discussed above, is overcome by the improved undertread measuring apparatus 10. FIGURES 1 and 2 show that the sensor holding plate 24 is rotatably attached to rod 28 by a front clevis 30 and a rear clevis 29. This rotatable attachment allows the sensor holding plate 24 to freely rotate about rod 28. Thus, if the sensor holding plate 24 was struck by a tire casing as it was being mounted by the operator, the sensor holding plate 24 would simply swing out of the way and then gravity would bring it back into proper alignment, parallel with a line 73 which is parallel with the ground (not shown in FIGURES 1 and 2), without operator input.

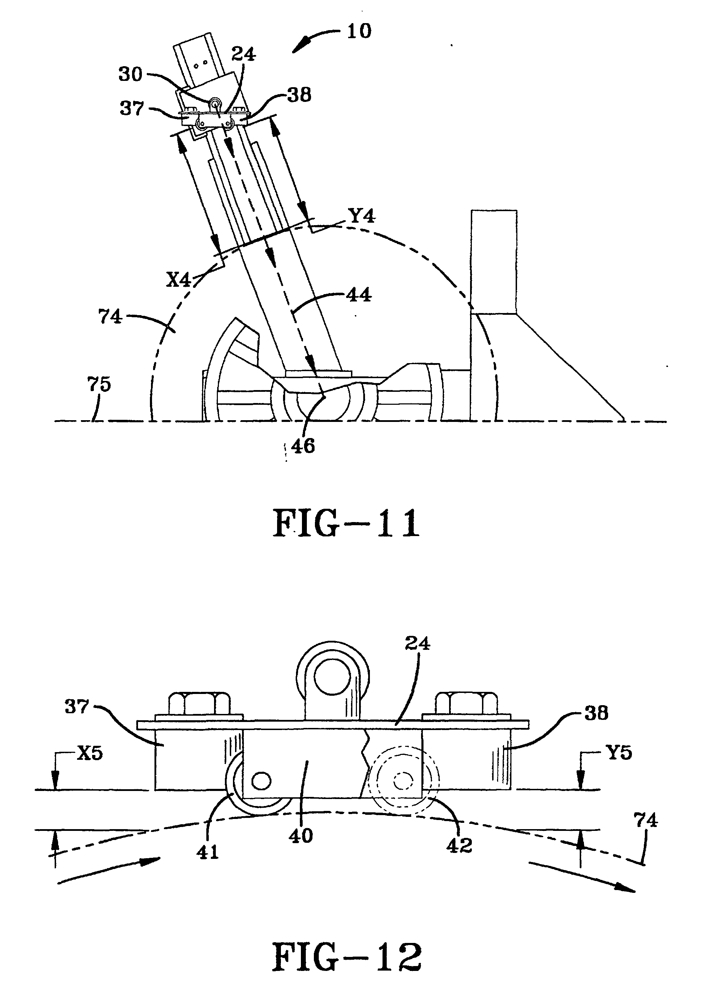

The problem of not having a sequential alignment, known in the prior art and discussed above, is also overcome by the improved undertread measuring apparatus 10. As seen in FIGURE 10, the bearing support plate 16 is attached to the base plate 18 at a less than 90° angle θ with respect to the ground 71 or with respect to a line 15 parallel with the ground 71. In FIGURE 2 this angle θ is shown with respect to line 73 which is parallel with the ground (not shown). This arrangement assures that as the sensor holding plate 24 is lowered, the right undertread sensing device 38 comes into operative association with the tire casing 74 first, then sequentially, the left undertread sensing device 37 would come into operative association with the tire. This sequential alignment is illustrated in FIGURE 11 which shows that as the sensor holding plate 24 is lowered, it moves along a radial line 44 toward the center 46 of the tire casing 74. The sensor holding plate 24 remains positioned parallel with line 75 which is parallel with the ground (not shown in FIGURE 11) due to the force of gravity and the rotating attachment between the holding plate 24 and the rod 28. As shown in FIGURES 1 and 2, the rotating attachment is effected by the rear clevis 29 and the front clevis 30. FIGURE 11 shows only the front clevis 30.

Referring again to FIGURE 11, the distance X4. between the left undertread sensing device 37 and the tire casing 74 is larger than the distance Y4. between the right undertread sensing device 38 and the tire casing 74. Thus, the right undertread sensing device 38 would come into operative association with the tire casing 74 then, sequentially, the left undertread sensing device 37 would come into operative association with the tire casing 74.

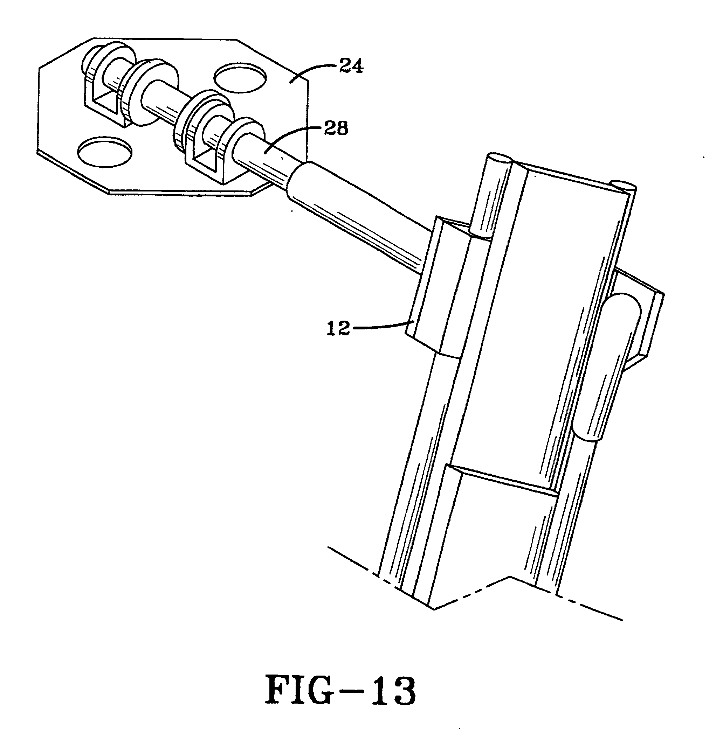

The alignment problem caused by the support bracket pivoting about the roller, known in the prior art and discussed above, is also overcome by the improved undertread measuring apparatus 10. As shown in FIGURE 3 and FIGURE 12, the improved undertread measuring apparatus 10 has a roller bar 40 with a left roller 41 and a right roller 42. As the sensor holding plate 24 is lowered, first the right roller 42 then the left roller 41 come into contact with the tire casing. The rollers are sequenced, first the right roller 42 then the left roller 41, just as the right undertread sensing device 38 and the left undertread sensing device 37 are sequenced. This is shown in FIGURE 11 and discussed above.

Referring now to FIGURE 12, since there are two rollers, a right roller 42 and a left roller 41, once they come into contact with the tire casing 74, which may rotate, the right undertread sensing device 38 and the left undertread sensing device 37 are automatically put into proper alignment without the sensor holding plate 24 pivoting out of alignment. Thus, the distance X5 between the left undertread sensing device 37 and the tire casing 74, and the distance Y5 between the right undertread sensing device 38 and the tire casing 74 are always the correct distances for proper alignment.

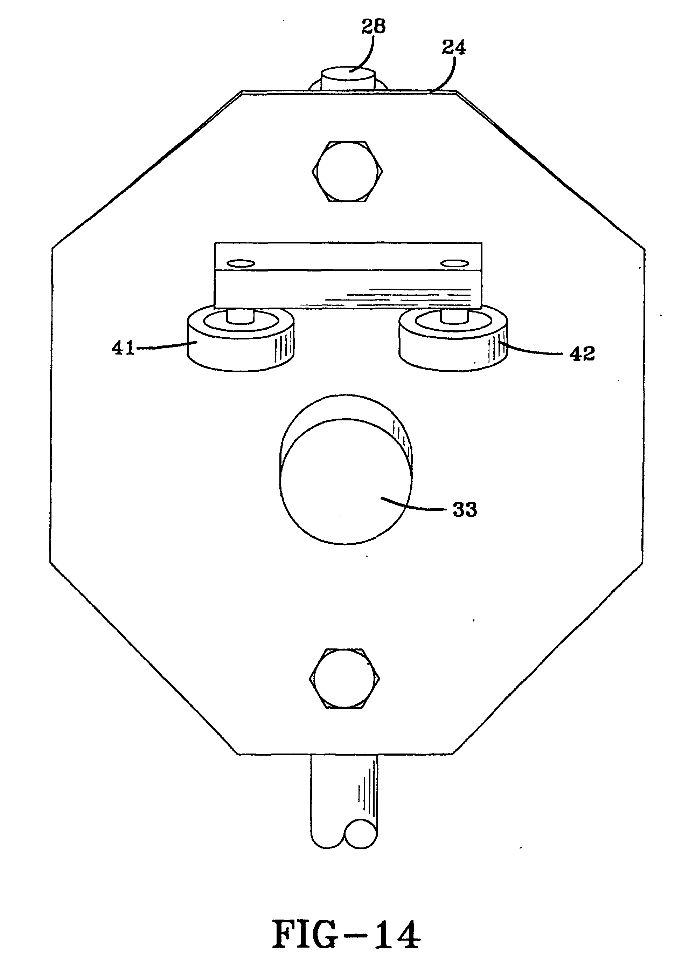

An application may arise where the lateral adjustments possible with steel tube 34 are not necessary, for example in the event of a standard size tire. In such case, the lateral distance will be constant. In another embodiment of this invention, shown in FIGURE 13, the rod 28 on which the sensor holding plate 24 rotates is directly attached to the sensor-to-bearing support plate 12. In this embodiment, rod 28 is not extensible along its length. Minor length adjustments can be made with the collars 31,32. In this embodiment, no steel tube 34, as shown in FIGURE 1, is required.

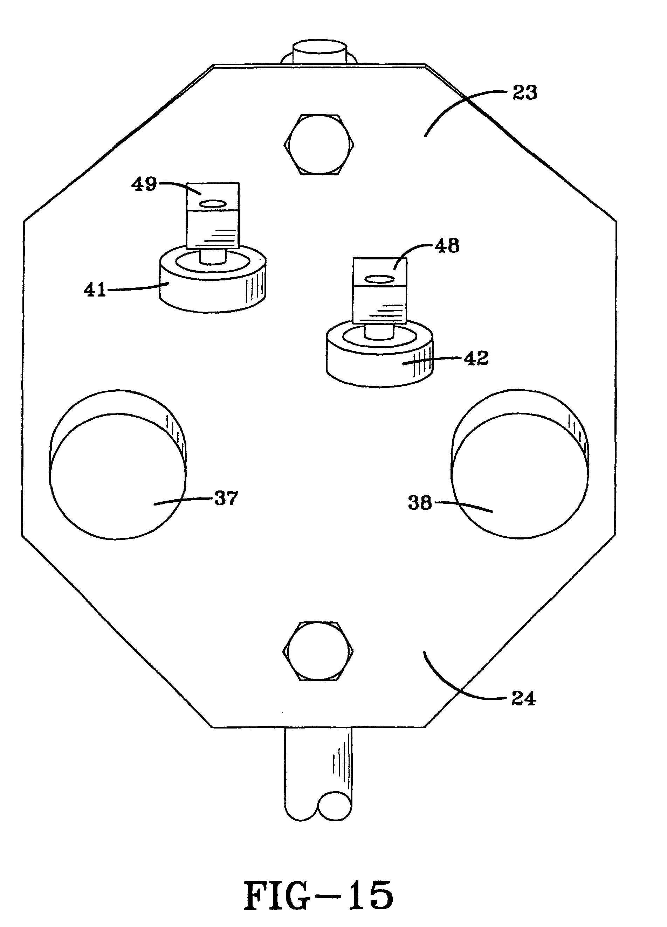

In another embodiment of this invention, shown in FIGURE 14, only one undertread sensing device 33 is used. This undertread sensing device 33 could be of any type known in the art, for example an electromagnetic transducer which measures the magnetic resistance between itself and the belt of the tire.

In still another embodiment of this invention, shown in FIGURE 15, the left roller 41 and the right roller 42 are not in line with each other. In this embodiment one roller, for example the right roller 42, is located forwardly and laterally of the other roller, for example the left roller 41. A left roller bar 49 is attached to the bottom 23 of the sensor holding plate 24 with the left roller 41 mounted to it such that the left roller 41 can roll freely. A right roller bar 48 is attached to the bottom 23 of the sensor holding plate 24 with the right roller 42 mounted to it such that the right roller 42 can roll freely.

## Claims

1. An apparatus (10) for measuring the thickness of rubber overlaying the belt of an associated tire, said apparatus comprising first sensing means (37) for sensing the thickness of rubber overlaying the belt of the tire, sensor holding means (24) for holding said first sensor, positioning means for positioning said sensing means, and supporting means for supporting said first sensing means and said positioning means, said apparatus being **characterized by** self-aligning means for self-aligning said first sensing means, the self-aligning means including a rod (28) having first and second ends, said first end of said rod being fixedly connected to said supporting means; rotating attachment means (29, 30) fixedly attached to said sensor holding means (24) and rotatably attached to said second end of said rod (28) to permit free rotation of said sensor holding means about said rod; and first and second rollers (41, 42) fixedly connected to said sensor holding means, the first and second rollers being free-rolling.

2. The apparatus of claim 1 **characterized by** second sensing means (38) for sensing the thickness of rubber overlaying the belt of the tire, said second sensing means cooperating with said first sensing means (37), said sensor holding means (24) holding said first sensing means and said second sensing means.

3. The apparatus of claim 1 **characterized by** said first roller (41) being located forwardly and laterally of said second roller (42).

4. The apparatus of claim 1 **characterized by** said first roller (41) being substantially in line with said second roller (42).

5. The apparatus of claim 2 **characterized by** said supporting means cooperating with said rod (28), said sensor holding means (24) and said rotating attachment means (29, 30) to provide a sequencing arrangement for placing said second sensing means (38) into operative association with the tire after said first sensing means (37) comes into operative association with the tire.

6. The apparatus of claim 5 **characterized by** said supporting means comprising a base (18) located laterally of the tire and an angled member (16) having a lower end and an upper end, said lower end of said angled member fixedly attached to said base, said angled member making an angle other than 90° with respect to the ground.

7. The apparatus of claim 1 **characterized by** said first sensing means (37) being a first electromagnetic transducer for measuring magnetic resistance between said first electromagnetic transducer and the belt of the tire.

8. The apparatus of claim 2 **characterized by** said first sensing means (37) being a first electromagnetic transducer for measuring magnetic resistance between said first electromagnetic transducer and the belt of the tire and by said second sensing means (38) being a second electromagnetic transducer for measuring magnetic resistance between said second electromagnetic transducer and the belt of the tire.

9. The apparatus of claim 1 **characterized by** said positioning means comprising a first lift cylinder (20).

10. A method for sequencing first and second devices (37, 38) to be used for measuring the thickness of rubber overlaying the belt of an associated tire, said first and second devices cooperating with positioning means for positioning said first and second devices, supporting means for supporting said first and second devices and said positioning means, said supporting means having a base (18), said base located laterally of the tire, an angled member (16) having a lower end and an upper end, said lower end of said angled member fixedly attached to said base (18), said angled member making an angle other than 90° with respect to the ground, a rod (28) having a first end and a second end, said first end of said rod fixedly connected to said supporting means, said second end of said rod extending over the tire, device holding means (24) for holding said first and second devices, rotating attachment means (29, 30), said rotating attachment means fixedly attached to said device holding means (24), said rotating attachment means rotatably attached to said second end of said rod (28), and first and second rollers (41, 42), said first and second rollers fixedly connected to said device holding means (24), said first and second rollers being free-rolling, said method **characterized by** the steps of:
lowering said device holding means (24) toward the tire with said positioning means until said first roller (41) contacts the tire, said first device (37) coming into operative association with the tire; and,
continuing to lower said device holding means (24), said device holding means rotating around said second end of said rod until said second roller (42) contacts the tire, said second device (38) coming into operative association with the tire.

## Patentansprüche

1. Vorrichtung (10) zum Messen der Dicke des Gummis, der über dem Gürtel eines zugehörigen Reifens liegt, wobei die Vorrichtung umfasst:
ein erstes Messmittel (37) zum Messen der Dicke des Gummis, der über dem Gürtel des Reifens liegt, ein Sensorhaltemittel (24) zum Halten des ersten Sensors, ein Positioniermittel zum Positionieren des Messmittels, und ein Trägermittel zum Tragen des ersten Messmittels und des Positioniermittels, wobei die Vorrichtung **gekennzeichnet ist durch** ein Selbstausrichtungsmittel zum Selbstausrichten des ersten Messmittels, wobei das Selbstausrichtungsmittel einen Stab (28) mit einem ersten und einem zweiten Ende umfasst, wobei das erste Ende des Stabes mit dem Trägermittel fest verbunden ist; ein Drehanbringungsmittel (29, 30), das an dem Sensorhaltemittel (24) fest angebracht und an dem zweiten Ende des Stabes (28) drehbar angebracht ist, um eine freie Drehung des Sensorhaltemittels um den Stab herum zuzulassen; und eine erste und eine zweite Rolle (41, 42), die mit dem Sensorhaltemittel fest verbunden sind, wobei die erste und die zweite Rolle frei rollen.

2. Vorrichtung nach Anspruch 1, **gekennzeichnet durch** ein zweites Messmittel (38) zum Messen der Dicke des Gummis, der über dem Gürtel des Reifens liegt, wobei das zweite Messmittel mit dem ersten Messmittel (37) zusammenwirkt und wobei das Sensorhaltemittel (24) das erste Messmittel und das zweite Messmittel hält.

3. Vorrichtung nach Anspruch 1, **dadurch gekennzeichnet, dass** die erste Rolle (41) vorne und seitlich in Bezug auf die zweite Rolle (42) angeordnet ist.

4. Vorrichtung nach Anspruch 1, **dadurch gekennzeichnet, dass** die erste Rolle (41) im Wesentlichen in einer Linie mit der zweiten Rolle (42) liegt.

5. Vorrichtung nach Anspruch 2, **dadurch gekennzeichnet, dass** das Trägermittel mit dem Stab (28), dem Sensorhaltemittel (24) und dem Drehanbringungsmittel (29, 30) zur Bereitstellung einer Einrichtung zum sequentiellen Anordnen zusammenwirkt, um das zweite Messmittel (38) in Wirkzuordnung mit dem Reifen zu bringen, nachdem das erste Messmittel (37) in Wirkzuordnung mit dem Reifen gelangt.

6. Vorrichtung nach Anspruch 5, **dadurch gekennzeichnet, dass** das Trägermittel eine Grundplatte (18), die seitlich von dem Reifen angeordnet ist, und ein abgewinkeltes Element (16) mit einem unteren Ende und einem oberen Ende umfasst, wobei das untere Ende des abgewinkelten Elements an der Grundplatte fest angebracht ist und das abgewinkelte Element einen anderen Winkel als 90° in Bezug auf den Boden bildet.

7. Vorrichtung nach Anspruch 1, **dadurch gekennzeichnet, dass** das erste Messmittel (37) ein erster elektromagnetischer Messwandler zum Messen des magnetischen Widerstandes zwischen dem ersten elektromagnetischen Messwandler und dem Gürtel des Reifens ist.

8. Vorrichtung nach Anspruch 2, **dadurch gekennzeichnet, dass** das erste Messmittel (37) ein erster elektromagnetischer Messwandler zum Messen des magnetischen Widerstandes zwischen dem ersten elektromagnetischen Messwandler und dem Gürtel des Reifens ist, und dass das zweite Messmittel (38) ein zweiter elektromagnetischer Messwandler zum Messen des magnetischen Widerstandes zwischen dem zweiten elektromagnetischen Messwandler und dem Gürtel des Reifens ist.

9. Vorrichtung nach Anspruch 1, **dadurch gekennzeichnet, dass** das Positioniermittel einen ersten Hubzylinder (20) umfasst.

10. Verfahren zum sequentiellen Anordnen einer ersten und einer zweiten Einrichtung (37, 38), die dazu verwendet werden, die Dicke des Gummis, der über dem Gürtel eines zugehörigen Reifens liegt, zu messen, wobei die erste und die zweite Einrichtung zusammenwirken mit einem Positioniermittel zum Positionieren der ersten und der zweiten Einrichtung, einem Trägermittel zum Tragen der ersten und der zweiten Einrichtung und des Positioniermittels, wobei das Trägermittel aufweist: eine Grundplatte (18), wobei die Grundplatte seitlich von dem Reifen angeordnet ist, ein abgewinkeltes Element (16) mit einem unteren Ende und einem oberen Ende, wobei das untere Ende des abgewinkelten Elements an der Grundplatte (18) fest angebracht ist, und wobei das abgewinkelte Element einen anderen Winkel als 90° in Bezug auf den Boden bildet, einem Stab (28) mit einem ersten Ende und einem zweiten Ende, wobei das erste Ende des Stabes mit dem Trägermittel fest verbunden ist und das zweite Ende des Stabes sich über dem Reifen erstreckt, einem Einrichtungshaltemittel (24) zum Halten der ersten und der zweiten Einrichtung, einem Drehanbringungsmittel (29, 30), wobei das Drehanbringungsmittel an dem Einrichtungshaltemittel (24) fest angebracht ist und das Drehanbringungsmittel an dem zweiten Ende des Stabes (28) drehbar angebracht ist, und einer ersten und einer zweiten Rolle (41, 42), wobei die erste und die zweite Rolle mit dem Einrichtungshaltemittel (24) fest verbunden sind und die erste und die zweite Rolle frei rollen, wobei das Verfahren durch die Schritte gekennzeichnet ist, dass:
das Einrichtungshaltemittel (24) mit dem Positioniermittel in Richtung des Reifens abgesenkt wird, bis die erste Rolle (41) den Reifen berührt, wobei die erste Einrichtung (37) in Wirkzuordnung mit dem Reifen gelangt; und
fortgefahren wird, das Einrichtungshaltemittel (24) abzusenken, wobei das Einrichtungshaltemittel um das zweite Ende des Stabes herum rotiert, bis die zweite Rolle (42) den Reifen berührt, wobei die zweite Einrichtung (38) in Wirkzuordnung mit dem Reifen gelangt.

## Revendications

1. Appareil (10) pour mesurer l'épaisseur du caoutchouc recouvrant la ceinture d'un bandage pneumatique associé, ledit appareil comprenant des premiers moyens de détection (37) pour détecter l'épaisseur du caoutchouc recouvrant la ceinture du bandage pneumatique, des moyens de maintien de détecteurs (24) pour maintenir lesdits premiers détecteurs, des moyens de positionnement pour positionner lesdits moyens de détection et des moyens de support pour supporter lesdits premiers moyens de détection et lesdits moyens de positionnement, ledit appareil étant **caractérisé par** des moyens d'auto-alignement pour soumettre lesdits premiers moyens de détection à un auto-alignement, les moyens d'auto-alignement englobant une tige (28) possédant des première et deuxième extrémités, ladite première extrémité de ladite tige étant reliée à demeure auxdits moyens de support ; des moyens de fixation rotatifs (29, 30) fixés à demeure auxdits moyens de maintien de détecteurs (24) et fixés en rotation à ladite deuxième extrémité de ladite tige (28) pour permettre une rotation libre desdits moyens de maintien de détecteurs autour de ladite tige ; ainsi que des premier et deuxième galets (41, 42) reliés à demeure auxdits moyens de maintien de détecteurs, les premier et deuxième galets étant du type à roulement libre.

2. Appareil selon la revendication 1, **caractérisé par** des deuxièmes moyens de détection (38) pour détecter l'épaisseur du caoutchouc recouvrant la ceinture du bandage pneumatique, lesdits deuxièmes moyens de détection coopérant avec lesdits premiers moyens de détection (37), lesdits moyens de maintien de détecteurs (24) maintenant lesdits premiers moyens de détection et lesdits deuxièmes moyens de détection.

3. Appareil selon la revendication 1, **caractérisé par le fait que** lesdits premiers galets (41) sont disposés à l'avant et en position latérale par rapport auxdits deuxièmes galets (42).

4. Appareil selon la revendication 1, **caractérisé par le fait que** lesdits premiers galets (41) sont disposés essentiellement en ligne avec lesdits deuxièmes galets (42).

5. Appareil selon la revendication 2, **caractérisé par le fait que** lesdits moyens de support coopèrent avec ladite tige (28), avec lesdits moyens de maintien de détecteurs (24) et avec lesdits moyens de fixation rotatifs (29, 30) pour procurer un arrangement successif destiné à placer lesdits deuxièmes moyens de détection (38) en association de travail avec le bandage pneumatique après avoir mis en association de travail lesdits premiers moyens de détection (37) avec le bandage pneumatique.

6. Appareil selon la revendication 5, **caractérisé par le fait que** lesdits moyens de support comprennent une base (18) disposée en position latérale par rapport au bandage pneumatique et un élément angulaire (16) possédant une extrémité inférieure et une extrémité supérieure, ladite extrémité inférieure dudit élément angulaire étant fixée à demeure à ladite base, ledit élément angulaire formant un angle différent de 90 degrés par rapport au sol.

7. Appareil selon la revendication 1, **caractérisé par le fait que** lesdits premiers moyens de détection (37) représentent un premier transducteur électromagnétique pour mesurer la résistance magnétique entre ledit premier transducteur électromagnétique et la ceinture du bandage pneumatique.

8. Appareil selon la revendication 2, **caractérisé par le fait que** lesdits premiers moyens de détection (37) représentent un premier transducteur électromagnétique pour mesurer la résistance magnétique entre ledit premier transducteur électromagnétique et la ceinture du bandage pneumatique et **par le fait que** lesdits deuxièmes moyens de détection (38) représentent un deuxième transducteur électromagnétique pour mesurer la résistance magnétique entre ledit deuxième transducteur électromagnétique et la ceinture du bandage pneumatique.

9. Appareil selon la revendication 1, **caractérisé par le fait que** lesdits moyens de positionnement comprennent un premier cylindre de levage (20).

10. Procédé pour utiliser successivement des premier et deuxième dispositifs (37, 38) afin de mesurer l'épaisseur du caoutchouc recouvrant la ceinture d'un bandage pneumatique associé, lesdits premier et deuxième dispositifs coopérant avec des moyens de positionnement pour positionner lesdits premier et deuxième dispositifs, avec des moyens de support pour supporter lesdits premier et deuxième dispositifs et lesdits moyens de positionnement, lesdits moyens de support possédant une base (18) disposée en position latérale par rapport au bandage pneumatique et un élément angulaire (16) possédant une extrémité inférieure et une extrémité supérieure, ladite extrémité inférieure dudit élément angulaire étant fixée à demeure à ladite base, ledit élément angulaire formant un angle différent de 90 degrés par rapport au sol, une tige (28) possédant des première et deuxième extrémités, ladite première extrémité de ladite tige étant reliée à demeure auxdits moyens de support, ladite deuxième extrémité de ladite tige s'étendant par-dessus le bandage pneumatique, des moyens de maintien de dispositifs (24) pour maintenir lesdits premier et deuxième dispositifs, des moyens de fixation rotatifs (29, 30), lesdits moyens de fixation rotatifs étant fixés à demeure auxdits moyens de maintien de dispositifs (24), lesdits moyens de fixation rotatifs étant fixés en rotation à ladite deuxième extrémité de ladite tige (28) pour permettre une rotation libre desdits moyens de maintien de détecteurs autour de ladite tige ; ainsi que des premier et deuxième galets (41, 42), lesdits premier et deuxième galets étant reliés à demeure auxdits moyens de maintien de dispositifs (24), lesdits premier et deuxième galets étant du type à roulement libre, ledit procédé étant **caractérisé par** les étapes consistant à :
abaisser ledit moyen de maintien de dispositifs (24) en direction du bandage pneumatique avec lesdits moyens de positionnement jusqu'à ce que lesdits premiers galets (41) entrent en contact avec le bandage pneumatique, lesdits premiers dispositifs (37) entrant en association de travail avec le bandage pneumatique, et
poursuivre l'abaissement dudit moyen de maintien de dispositifs (24), lesdits moyens de maintien de dispositif tournant autour de ladite deuxième extrémité de ladite tige jusqu'à ce que lesdits deuxièmes galets (42) entrent en contact avec le bandage pneumatique, lesdits deuxièmes dispositifs (38) entrant en association de travail avec le bandage pneumatique.
